Europäisches Patentamt

European Patent Office

Office européen des brevets

(19)

(11) Numéro de publication : **0 441 672 A1**

## (12) DEMANDE DE BREVET EUROPEEN

(21) Numéro de dépôt : **91400172.2**

(51) Int. Cl.⁵ : **B01D 11/02**

(22) Date de dépôt : **25.01.91**

(30) Priorité : **29.01.90 FR 9000983**

(43) Date de publication de la demande :
**14.08.91 Bulletin 91/33**

(84) Etats contractants désignés :
**BE CH DE ES GB IT LI NL**

(71) Demandeur : **COMMISSARIAT A L'ENERGIE ATOMIQUE**
**31-33, rue de la Fédération**
**F-75015 Paris (FR)**
Demandeur : **UNIVERSITE DES SCIENCES ET TECHNIQUES DU LANGUEDOC (Montpellier I)**
**Place Eugène Bataillon**
**F-34060 Montpellier (FR)**

(72) Inventeur : **Baccou, Jean-Claude**
**82 rue Azalais d'Altier**
**F-34080 Montpellier (FR)**
Inventeur : **Faugeras, Pierre**
**10 rue de Pierrelatte**
**F-30130 Pont Saint Esprit (FR)**
Inventeur : **Ros, Pierre**
**Chemin de l'Ousidou, Sauveterre**
**F-30150 Roquemaure (FR)**
Inventeur : **Sauvaire, Yves**
**246 Chemin de la Qualité Montferrier sur Lez**
**F-34980 Saint Gely du Fesc (FR)**

(74) Mandataire : **Lhoste, Catherine et al**
**BREVATOME 25, rue de Ponthieu**
**F-75008 Paris (FR)**

(54) **Procédé d'extraction des constituants d'une matière végétale utilisant des solvants selectifs.**

(57)     Procédé d'extraction des constituants d'une matière végétale utilisant des solvants sélectifs.

Ce procédé d'extraction permet d'extraire (i) les protéines, (ii) les composés alcoolo-solubles ainsi que (iii) les lipides d'une matière végétale telle que les graines de lupin amer ou les fèves. A cet effet, ce procédé comporte les étapes suivantes : A) broyage de la matière végétale pour former une poudre ; B) première extraction solide-liquide pour extraire les lipides, consistant à mettre la poudre au contact d'un solvant choisi dans le groupe constitué des alcanes aliphatiques, des alcanes aromatiques et de leurs dérivés halogénés ; C) seconde extraction solide-liquide pour extraire les composés alcoolo-solubles, consistant à mettre le produit solide obtenu en B) au contact d'une solution alcoolique dont le titre est supérieur à 30° et D) troisième extraction solide-liquide pour extraire les protéines consistant à mettre le produit solide obtenu en C) au contact d'une solution aqueuse de pH supérieur à 6.

EP 0 441 672 A1

# PROCEDE D'EXTRACTION DES CONSTITUANTS D'UNE MATIERE VEGETALE UTILISANT DES SOLVANTS SELECTIFS

La présente invention a pour objet un procédé industriel d'extraction des différents constituants d'une matière végétale utilisant des solvants sélectifs. Ces constituants sont en particulier des lipides, des composés aromatiques, des sucres, des alcaloïdes ainsi que des protéines qui sont extraits de plantes entières ou d'organes végétaux tels que les graines dans lesquels certains composés se sont accumulés.

Ce procédé d'extraction peut être utilisé, soit en vue d'extraire des constituants valorisables de la matière végétale tels que de l'huile à partir des graines de soja ou de lupin ou les protéines, soit d'extraire les constituants gênants en vue de valoriser la matière végétale comme par exemple enlever l'amertume des concentrats de farine de fèves ou des graines de lupin.

L'invention s'applique essentiellement dans le domaine agro-alimentaire pour l'alimentation humaine ou animale, dans le domaine de l'hygiène et de la parfumerie ou encore dans le domaine médical.

Le procédé d'extraction des constituants d'une matière végétale conforme à l'invention est basé sur des extractions solide-liquide successives utilisant des solvants sélectifs de polarité croissante. Ces étapes d'extraction successives solide-liquide permettent d'extraire la majeure partie des constituants de la matière végétale et de valoriser cette dernière et les constituants qu'elle renferme.

Le procédé de l'invention comporte tout d'abord une étape de broyage de la matière végétale (plantes entières ou organes de plantes), une étape d'extraction solide-liquide pour extraire les alcaloïdes ou les composés alcoolo-solubles (composés aromatiques, sucres) constituant cette matière végétale en utilisant une solution alcoolique dont le titre est choisi supérieur à 30°, puis une extraction solide-liquide pour extraire les protéines de la matière végétale en utilisant une solution aqueuse de pH neutre ou basique.

L'utilisation d'une solution alcoolique de titre supérieur à 30 permet de ne solubiliser que très faiblement voire même pas du tout les protéines de la matière végétale contrairement à ce qui se passe avec une solution alcoolique de titre inférieur à 30. Le titre de la solution alcoolique peut aller jusqu'à 100°.

Afin d'éviter toute solubilisation des protéines dans la solution alcoolique, on utilise avantageusement une solution alcoolique de titre allant de 50 à 85° et par exemple de l'ordre de 70°. Une telle solution alcoolique présente en outre une polarité plus élevée que la même solution alcoolique de titre 96° permettant ainsi d'augmenter la vitesse d'extraction des différents produits ; la polarité de la solution alcoolique croît au fur et à mesure que le titre décroît.

Les alcools utilisables sont des alcools monohydroxylés comportant de 1 à 20 atomes de carbone. De préférence, on utilise l'alcool éthylique bien que d'autres alcools tels que l'alcool méthylique ou iso-propylique peuvent être utilisés.

L'extraction solide-liquide avec la solution alcoolique permet de débarrasser la matière végétale en poudre des produits gênants tels que les alcaloïdes et les composés aromatiques. La matière solide obtenue contient la majeure partie ou la totalité des protéines de la matière végétale traitée.

L'extraction solide-liquide avec la solution aqueuse de polarité supérieure à celle de la solution alcoolique permet une solubilisation des protéines végétales. Cette solution de protéines peut alors être concentrée soit de façon à obtenir les protéines sous forme de poudre par atomisation ou lyophilisation, soit sous forme isolée et purifiée par ultra-filtration. Les concentrats ou les isolats protéiques ainsi obtenus sont utilisables en alimentation humaine ou animale.

La solution aqueuse utilisée pour solubiliser les protéines est de l'eau ou une solution saline basique dont le pH est choisi entre 6 et 14 et de préférence de 7 à 11. La basicité de la solution aqueuse peut être ajustée grâce à de la soude ou de la potasse.

Pour des raisons de rentabilité industrielle (coût faible et rendement élevé), le procédé de l'invention comporte deux variantes de mise en oeuvre selon que la matière végétale à traiter renferme une faible teneur en lipides (au plus égale à 25% du poids de matière sèche) ou une grande quantité de lipides.

Selon une première variante, le procédé de l'invention permet l'extraction des constituants d'une matière végétale contenant principalement (i) des protéines et (ii) des alcaloïdes ou des composés alcoolo-solubles ; il comporte les étapes suivantes :

a) - broyage de la matière végétale pour former une poudre,

b) - première extraction solide-liquide pour extraire les alcaloïdes ou les composes alcoolo-solubles consistant à mettre la poudre végétale au contact d'une solution alcoolique dont le titre est supérieur à 30°,

c) - seconde extraction solide-liquide pour extraire les protéines consistant à mettre le produit solide obtenu en (b) au contact d'une solution aqueuse de pH supérieur à 6.

Lorsque la matière végétale ainsi traitée renferme des traces de lipides, ceux-ci peuvent alors être extraits à partir de la solution alcoolique. A cet effet, on ramène le titre de la solution alcoolique à une valeur au plus égale à 30, notamment par distillation ou dilution avec de l'eau, puis on met en contact la solution alcoolique obtenue en b) avec un solvant organique choisi dans le groupe constitué des alcanes aliphatiques, des alcanes aromatiques et de leurs dérivés halogénés ; ce type de solvant de polarité inférieure à celle de la solution alcoolique permet la solubilisation des lipides.

Selon une seconde variante de mise en oeuvre, le procédé de l'invention permet l'extraction des constituants d'une matière végétale contenant principalement (i) des protéines, (ii) des alcaloïdes ou des composés alcoolo-solubles et (iii) des lipides ; il comporte les étapes suivantes :

A) - broyage de la matière végétale pour former une poudre,

B) - première extraction solide-liquide pour extraire les lipides, consistant à mettre la poudre végétale au contact d'un solvant choisi dans le groupe constitué des alcanes aliphatiques, des alcanes aromatiques et de leurs dérivés halogénés,

C) - seconde extraction solide-liquide pour extraire les alcaloïdes ou les composés alcoolo-solubles, consistant à mettre le produit solide obtenu en B) au contact d'une solution alcoolique dont le titre est supérieur à 30°, et

D) - troisième extraction solide-liquide pour extraire les protéines consistant à mettre le produit solide obtenu en C) au contact d'une solution aqueuse de pH supérieur à 6.

Selon une troisième variante de mise en oeuvre, le procédé de l'invention permet l'extraction des constituants d'une matière végétale contenant principalement (i) des protéines, (ii) des alcaloïdes ou des composés alcoolo-solubles et (iii) des lipides ; il comporte les étapes suivantes :

A') - broyage de la matière végétale pour former une poudre,

B') - première extraction solide-liquide pour extraire simultanément les lipides et les alcaloïdes ou les composés alcoolo-solubles consistant à mettre la poudre végétale au contact d'un mélange de deux solvants, l'un des solvants étant choisi dans le groupe constitué des alcanes aliphatiques, des alcanes aromatiques et leurs dérivés halogénés et l'autre solvant étant une solution alcoolique dont le titre est supérieur à 30°, et

C') - seconde extraction solide-liquide pour extraire les protéines consistant à mettre le produit solide obtenu en B') au contact d'une solution aqueuse de pH supérieur à 6.

Dans cette troisième variante, les lipides sont extraits du milieu liquide obtenu en B') en y rajoutant de l'eau de manière à obtenir un titre en alcool de 30° au plus et en réalisant une extraction liquide-liquide de ce milieu par un solvant choisi dans le groupe constitué des alcanes aliphatiques, des alcanes aromatiques et de leurs dérivés halogénés.

Les alcanes utilisés pour la solubilisation des lipides, aussi bien dans le cas de l'extraction solide-liquide que dans le cas de l'extraction liquide-liquide, comportent de 1 à 20 atomes de carbone. Comme alcanes utilisables dans l'invention, on peut citer l'hexane, le benzène, le toluène, le dichlorométhane et le trichloro 112, trifluoro 112 éthane connu sous le nom de flugène 113-E.

Dans le tourteau protéique obtenu après les différentes extractions solide-liquide, on peut avantageusement réincorporer des lipides. Ceci permet d'obtenir, d'une part, des tourteaux contenant des protéines et des lipides débarrassés des alcaloïdes ou composés aromatiques et, d'autre part, de pouvoir réincorporer les mêmes lipides que ceux extraits du végétal, mais à des taux différents, ou d'autres lipides lorsque l'on envisage l'utilisation de ces produits en diététique.

Afin de faciliter les extractions solide-liquide de la matière végétale, on peut effectuer un compactage de la poudre végétale ; la cohésion du compactage peut être assurée à l'aide d'un liant notamment de qualité alimentaire lorsque les constituants extraits de la matière végétale sont destinés à l'industrie agro-alimentaire. Ces liants sont en particulier les alginates et les dérivés cellulosiques comme les carboxyméthylcelluloses.

Ce compactage permet d'éviter l'encrassement des colonnes d'extraction par des poudres trop fines ainsi qu'une répartition homogène de la densité des particules dans ces colonnes.

Le procédé de l'invention est applicable à tout produit d'origine végétale, et est utilisable dans tous les appareillages classiques, par exemple les colonnes à flux pulsé. Les colonnes pulsées utilisées pour l'extraction solide-liquide en continu comprennent habituellement un décanteur supérieur, un fût muni d'un garnissage constitué par exemple de plateaux de type disques et couronnes, et un décanteur inférieur. Dans une telle colonne, la poudre éventuellement compactée est introduite dans le décanteur supérieur et elle circule dans la colonne à contre-courant du solvant introduit dans le décanteur inférieur. La pulsation assure une fluidisation totale de la poudre et une circulation facile de cette dernière.

Lorsque l'extraction est réalisée au moyen d'un liquide sous pression, on peut utiliser par exemple les appareillages décrits dans le document W087/01299.

On peut aussi éviter le compactage et utiliser une autre méthode qui consiste à broyer le produit de départ dans le solvant utilisé pour la première extraction solide-liquide (solution alcoolique et/ou alcanes), à une granulométrie comprise entre quelques micromètres et quelques dizaines de micromètres qui faciliterait entre autres la libération des lipides contenus dans des vésicules de quelques micromètres de diamètre moyen) et à séparer les deux phases solvant et solide dans un appareil centrifuge continu à bol tournant par exemple. On peut alors être amené à prévoir dans ce dernier appareil : 2 sorties liquide et 1 sortie solide dans le cas où il y a démixion d'une partie des huiles.

D'autres caractéristiques et avantages de l'invention apparaîtront mieux à la lecture des exemples suivants, donnés à titre illustratif et non limitatif.

EXEMPLE 1

Cet exemple concerne le traitement des graines de lupin amer qui sont actuellement difficilement valorisables à cause de la présence d'alcaloïdes et de composés responsables de leur amertume.

On broie tout d'abord les graines de lupin amer à l'aide d'un broyeur Buhler-Miag modèle MLI204 de manière à obtenir une poudre dont la granulométrie est inférieure à 100 micromètres.

A cette poudre, on ajoute un liant constitué par une carboxyméthylcellulose de sodium de qualité alimentaire commercialisée sous la référence 7LXF en quantité représentant 0,5% en poids de la poudre obtenue précédemment. On ajoute également de l'eau de manière à obtenir une teneur finale en eau du mélange de 14%.

On compacte alors ce mélange avec un compacteur granulateur Alexanderwerk type WP 50N/75 en réglant la pression à $85.10^5$ Pa et en choisissant une grille dont l'ouverture de maille est de 2 mm.

Dans ces conditions, on obtient des granulés non friables ayant la forme d'un parallélépipède rectangle de dimensions 1mmx2mmx2mm.

On soumet ensuite ces granulés à trois extractions solide-liquide en utilisant des solvants de polarité croissante constitués respectivement par de l'hexane, de l'alcool éthylique de titre 70° et de l'eau ajustée à pH=7 grâce à une solution de NaOH à 40g/l.

La première extraction solide-liquide permet d'extraire les lipides des graines de lupin ; elle consiste à mettre les granulés obtenus au contact de l'hexane de façon à solubiliser les lipides dans ce dernier.

Les lipides sont séparés de la solution hexanique par évaporation de l'hexane.

Le produit solide issu de cette première extraction solide-liquide est mis au contact de la solution éthylique à 70° de façon à y solubiliser la totalité des alcaloïdes et des composés aromatiques présents dans les graines de lupin.

Les alcaloïdes et ces composés aromatiques peuvent être séparés de la solution alcoolique par évaporation de l'alcool et distillation fractionnée.

Le tourteau solide obtenu après les deux extractions solide-liquide ci-dessus est mis en contact avec l'eau ajustée à pH=7, de façon à solubiliser les protéines. A partir de cette solution, les protéines peuvent être lyophilisées ou atomisées.

La mise en oeuvre du procédé de l'invention permet ainsi d'obtenir une huile de lupin sans trace d'alcaloïde, un extrait alcoolique contenant la totalité des alcaloïdes et arômes présents dans les graines, et un tourteau protéique qui contient toutes les protéines, mais qui est débarrassé de l'amertume caractéristique des graines de lupin amer.

Ainsi, le procédé de l'invention permet de valoriser trois sortes de produits des graines de lupin : l'huile, les alcaloïdes et les protéines.

EXEMPLE 2

Cet exemple concerne le traitement des farines de fèves en vue d'en extraire les composés responsables de leur amertume.

La farine de fèves a été obtenue par broyage de fèves selon une granulométrie de 15 à 30 micromètres. A la poudre obtenue, on ajoute 0,5% en poids de liant 7 LXF et 14% en poids d'eau, puis on compacte la farine de fèves à l'aide d'une presse à compacter de marque Alexanderwerk type WP50 en réglant la pression à $50.10^5$ Pa et en choisissant une grille dont l'ouverture de maille permet l'obtention de granules de 2 millimètres de diamètre.

On met ensuite en contact les granulés de poudre de fèves ainsi obtenus avec de l'alcool éthylique de titre 70° en utilisant un rapport en poids granulés/solvant de 1/10. On agite le mélange pendant 10 minutes puis on sépare la poudre du solvant par filtration.

Dans ces conditions on a extrait la totalité des composés responsables de l'amertume des farines de fèves.

Le produit solide obtenu lors de cette première extraction solide-liquide est alors mis au contact d'eau ajustée à pH=7 de façon à solubiliser les protéines des fèves. Ces protéines peuvent être obtenues à l'état de poudre par atomisation ou lyophilisation. La farine de fèves ainsi obtenue peut être utilisée en alimentation humaine.

Dans cet exemple, on n'effectue pas d'extraction solide-liquide à l'hexane du fait que les fèves ne contiennent que 1 à 2% en poids de matière sèche de lipides, cette étape d'extraction à l'hexane n'étant pas rentable du point de vue industriel.

La récupération de l'huile contenue dans les fèves peut se faire à partir de la solution alcoolique à laquelle on ajoute de l'eau afin d'abaisser le titre de cette solution à 30°. On effectue ensuite une extraction liquide-liquide à l'hexane en mettant en contact la solution alcoolique de titre faible avec de l'hexane afin de solubiliser les lipides dans l'hexane.

La séparation des lipides de l'hexane se fait comme dans l'exemple 1.

**Revendications**

1. Procédé d'extraction des constituants d'une matière végétale contenant principalement (i) des protéines et (ii) des alcaloïdes ou des composés alcoo-solubles, comportant les étapes suivantes:

   a) - broyage de la matière végétale pour former une poudre,

   b) - première extraction solide-liquide pour extraire les alcaloïdes ou les composés alcoolo-solubles consistant à mettre la poudre végétale au contact d'une solution alcoolique dont le titre est choisi supérieur à 30°, et

   c) - seconde extraction solide-liquide pour extraire les protéines consistant à mettre le produit solide obtenu en (b) au contact d'une solution aqueuse de pH supérieur à 6.

2. Procédé selon la revendication 1, caractérisé en ce que la matière végétale renfermant des traces de lipides, on amène le titre de la solution alcoolique à une valeur au plus égale à 30 puis on met en contact la solution alcoolique obtenue en b) avec un solvant choisi dans le groupe constitué des alcanes aliphatiques, des alcanes aromatiques et de leurs dérivés halogénés en vue d'extraire de la solution alcoolique les lipides.

3. Procédé d'extraction des constituants d'une matière végétale contenant principalement (i) des protéines, (ii) des alcaloïdes ou des composés alcoolo-solubles et (iii) des lipides, comportant les étapes suivantes :

   A) - broyage de la matière végétale pour former une poudre,

   B) - première extraction solide-liquide pour extraire les lipides, consistant à mettre la poudre végétale au contact d'un solvant choisi dans le groupe constitué des alcanes aliphatiques, des alcanes aromatiques et de leurs dérivés halogénés,

   C) - seconde extraction solide-liquide pour extraire les alcaloïdes ou les composes alcoolo-solubles, consistant à mettre le produit solide obtenu en B) au contact d'une solution alcoolique dont le titre est supérieur à 30°, et

   D) - troisième extraction solide-liquide pour extraire les protéines consistant à mettre le produit solide obtenu en C) au contact d'une solution aqueuse de pH supérieur à 6.

4. Procédé d'extraction des constituants d'une matière végétale contenant principalement (i) des protéines, (ii) des alcaloïdes ou des composés alcoolo-solubles et (iii) des lipides ; il comporte les étapes suivantes :

   A') - broyage de la matière végétale pour former une poudre,

   B') - première extraction solide-liquide pour extraire simultanément les lipides et les alcaloïdes ou les composés alcoolo-solubles consistant à mettre la poudre végétale au contact d'un mélange de deux solvants, l'un des solvants étant choisi dans le groupe constitué des alcanes aliphatiques, des alcanes aromatiques et leurs dérivés halogénés et l'autre solvant étant une solution alcoolique dont le titre est supérieur à 30°, et

   C') - seconde extraction solide-liquide pour extraire les protéines consistant à mettre le produit solide obtenu en B') au contact d'une solution aqueuse de pH supérieur à 6.

5. Procédé selon la revendication 4, caractérisé en ce que l'on extrait les lipides du milieu liquide obtenu en B') en y ajoutant de l'eau de manière à obtenir un titre en alcool de 30° au plus et en réalisant une extraction liquide-liquide de ce milieu par un solvant choisi dans le groupe constitué des alcanes aliphatiques, des alcanes aromatiques et de leurs dérivés halogénés.

6. Procédé selon l'une quelconque des revendications 2 à 5, caractérisé en ce que le solvant utilisé pour l'extraction des lipides est un alcane aliphatique.

7. Procédé selon l'une quelconque des revendications 2 à 5, caractérisé en ce que le solvant utilisé pour l'extraction des lipides est de l'hexane.

8. Procédé selon l'une quelconque des revendications 1 à 7, caractérisé en ce que le titre de la solution alcoolique est égal à 70°.

9. Procédé selon l'une quelconque des revendications 1 à 8, caractérisé en ce que la solution alcoolique est une solution éthylique.

10. Procédé selon l'une quelconque des revendications 1 à 9, caractérisé en ce que l'on concentre la solution aqueuse renfermant les protéines.

11. Procédé selon l'une quelconque des revendications 1 à 10, caractérisé en ce que l'on ajoute un liant à la poudre de matière végétale puis on la compacte, avant d'effectuer les extractions solide-liquide.

12. Procédé selon l'une quelconque des revendications 1 à 10, caractérisé en ce que l'on broie la matière végétale dans le solvant utilise pour la première extraction solide-liquide.

13. Procédé selon l'une quelconque des revendications 1 à 12, caractérisé en ce que la matière végétale est constituée par des graines.